# EUROPÄISCHE PATENTSCHRIFT

(11) **EP 1 963 935 B1**
(45) Veröffentlichungstag und Bekanntmachung des Hinweises auf die Patenterteilung: **11.04.2012**
(21) Anmeldenummer: 06830293.4
(22) Anmeldetag: 01.12.2006
(51) Int. Cl.: G05B 19/19, G05B 19/4103

(54) **ERMITTLUNGSVERFAHREN FÜR EINE LAGEGEFÜHRT ABZUFAHRENDE GROBBAHN**
METHOD FOR THE DETERMINATION OF A ROUGH TRAJECTORY TO BE FOLLOWED IN A POSITIONALLY GUIDED MANNER
PROCEDE DE DETERMINATION D'UNE TRAJECTOIRE APPROXIMATIVE A SUIVRE DE MANIERE GUIDEE EN POSITION

(30) Priorität: 22.12.2005 DE 102005061570
(43) Veröffentlichungstag der Anmeldung: 03.09.2008
(73) Patentinhaber: SIEMENS AKTIENGESELLSCHAFT, 80333 München (DE)
(72) Erfinder: HOFFMANN, Walter, 91054 Erlangen (DE); PAPIERNIK, Wolfgang, 91077 Neunkirchen (DE); SAUER, Tomas, 90537 Feucht (DE)
(86) Internationale Anmeldenummer: PCT/EP2006/069227
(87) Internationale Veröffentlichungsnummer: WO 2007/074025

(56) Entgegenhaltungen:
- EP-A1- 0 594 699
- DE-A1- 10 355 614
- DE-C1- 10 156 781

## Beschreibung

Die vorliegende Erfindung betrifft ein von einem Rechner ausgeführtes Ermittlungsverfahren für eine lagegeführt abzufahrende Grobbahn, wobei dem Rechner eine lagegeführt abzufahrende Anfangsbahn vorgegeben wird, welche durch eine Anfangsfunktion beschrieben ist, so dass durch Einsetzen eines skalaren Bahnparameters in die Anfangsfunktion jeweils eine korrespondierende Position auf der Anfangsbahn bestimmt ist.

Derartigen Ermittlungsverfahren sind allgemein bekannt. Beispielhaft wird auf die EP 0 594 699 B1 sowie auf die DE 103 55 614 verwiesen.

Bei der EP 0 594 699 B1 ist die Anfangsbahn mittels der Zeit als skalarem Bahnparameter beschrieben. In elektronischen Filtern werden diejenigen Bahnanteile ermittelt, die mit Beschleunigungen oberhalb bzw. unterhalb eines Grenzwerts korrespondieren. Die Grobbahn entspricht den Bahnanteilen, die mit Beschleunigungen unterhalb des Grenzwerts korrespondieren. Die Grobbahn wird zur Ansteuerung eines niederdynamischen Antriebs verwendet. Die Bahnanteile mit Beschleunigungen oberhalb des Grenzwerts entsprechen einer Feinbahn. Sie werden zur Ansteuerung eines hochdynamischen Antriebs verwendet.

Bei der EP 0 594 699 B1 ist auf Grund einer speziellen Abstimmung der möglichen Auslenkung des hochdynamischen Antriebs, der möglichen Beschleunigung des niederdynamischen Antriebs und der maximal zulässigen Bahngeschwindigkeit gewährleistet, dass der Abstand der Grobbahn von der Anfangsbahn zu jedem Zeitpunkt unterhalb der maximal möglichen Auslenkung des hochdynamischen Antriebs bleibt.

Bei der DE 103 55 614 Al ist die Anfangsbahn ebenfalls mit der Zeit als skalarem Bahnparameter beschrieben. Bei dieser Schrift erfolgt in elektronischen Filtern eine Aufteilung der Anfangsbahn in einen hochfrequenten und in einen niederfrequenten Bahnanteil. Der niederfrequente Bahnanteil entspricht der Grobbahn. Bei der DE 103 55 614 A1 ist nicht a priori gewährleistet, dass der Abstand der Grobbahn von der Anfangsbahn unabhängig vom Wert des skalaren Bahnparameters stets unterhalb einer vorbestimmten Schranke liegt.

Zur Bewegungsplanung von Maschinen, beispielsweise von Bearbeitungsmaschinen, insbesondere von Werkzeugmaschinen, wird im Stand der Technik üblicherweise wie folgt vorgegangen: Einem Rechner wird ein Teileprogramm vorgegeben. Das Teileprogramm-legt zum Einen eine lagegeführt abzufahrende Kontur fest und enthält zum Anderen einen gewünschten (möglichst konstanten) Geschwindigkeitsverlauf, nachfolgend auch Bahngeschwindigkeit genannt. Die Kontur entspricht in der Regel bereits einer lagegeführt abzufahrenden Anfangsbahn. Gegebenenfalls kann der Rechner aber auch vorab anhand der gewünschten Kontur die Anfangsbahn ermitteln.

Die Anfangsbahn ist in der Regel eine zwei- oder dreidimensionale Bahn. Sie kann aber auch nur eindimensional oder aber, wenn sowohl translatorische als auch rotatorische Bewegungen ausgeführt werden sollen, mehr als dreidimensional sein. Sie ist zunächst als Funktion eines skalaren, dimensionslosen Bahnparameters gegeben. Dieser Bahnparameter ist also, eben weil er dimensionslos ist, insbesondere von der Zeit verschieden. Er ist aber - zumindest indirekt - bereits charakteristisch für einen entlang der Anfangsbahn zurückgelegten Weg.

Der dimensionslose Bahnparameter wird vom Rechner auf einen entlang der Anfangsbahn zurückgelegten Weg abgebildet. Als nächstes wird der Bahnparameter durch Einbeziehen des gewünschten Geschwindigkeitsverlaufs auf die Zeit abgebildet. Die nunmehr ermittelte Trajektorie wird einer Prüfeinrichtung zugeführt. Die Prüfeinrichtung ist dabei Bestandteil des Rechners. Sie ermittelt getaktet die Lagesollwerte - eventuell auch die Geschwindigkeitssollwerte - für anzusteuernde Achsen und gibt diese Sollwerte aus. Weiterhin überprüft sie die Lagesollwerte und deren zeitliche Ableitungen (Geschwindigkeiten, Beschleunigungen, Rucke) auf Einhaltung vorgegebener Grenzwerte. Wird mindestens einer der Grenzwerte überschritten, muss die Bahngeschwindigkeit zumindest lokal abgesenkt werden und ein erneuter Durchlauf durch die Prüfeinrichtung durchgeführt werden.

Bei nichtredundanten Kinematiken, also wenn für jede angesteuerte Achse genau ein Antrieb bzw. eine gemeinsam angesteuerte Antriebsgruppe angesteuert werden muss, ist diese Vorgehensweise vollauf zufrieden stellend. Bei redundanten Kinematiken hingegen, wenn das Abfahren der Anfangsbahn also für mindestens eine angesteuerte Achse in eine Grobbahn für einen niederdynamischen Antrieb und eine Feinbahn für einen hochdynamischen Antrieb aufgeteilt wird, wobei die Grobbahn und die Feinbahn sich zur Anfangsbahn ergänzen, führt diese Vorgehensweise nur zu unbefriedigenden Ergebnissen. Dies gilt unabhängig davon, ob die Prüfeinrichtung nur die Anfangsbahn oder die Grobbahn und die Feinbahn auf Einhaltung der Grenzwerte überprüft.

Wenn die Prüfeinrichtung nur die Anfangsbahn auf Einhaltung der Grenzwerte überprüft, könnte - theoretisch - die Vorgabe der Grenzwerte natürlich derart erfolgen, dass sie sowohl vom niederdynamischen als auch vom hochdynamischen Antrieb eingehalten werden können. Eine derartige Vorgabe der Grenzwerte wäre aber sinnlos, da dann jeglicher Vorteil, der durch die Aufteilung in Grobbahn und Feinbahn erreicht werden soll, aufgegeben würde. Werden die Grenzwerte aber derart vorgegeben, dass sie nicht stets von beiden Antrieben erfüllt werden können, insbesondere der Beschleunigungsgrenzwert nur vom hochdynamischen Antrieb, nicht aber vom niederdynamischen Antrieb erreicht würde, besteht die Gefahr, dass der Verfahrbereich des hochdynamischen Antriebs nicht eingehalten wird, der Beschleunigungsgrenzwert des niederdynamischen Antriebs nicht eingehalten wird und/oder Geschwindigkeits- und Ruckgrenzwerte mindestens eines der beiden Antriebe nicht eingehalten werden. In diesem Fall muss also zusätzlich zur Anfangsbahn nach der Aufteilung der Anfangsbahn in die Grobbahn und die Feinbahn für beide Bahnen noch überprüft werden, ob deren Grenzwerte eingehalten werden. Erfolgt eine Verletzung dieser Grenzwerte,
- muss die Bahngeschwindigkeit zumindest lokal abgesenkt werden,
- muss der für den Verfahrweg charakteristische, von der Zeit verschiedene skalare Bahnparameter durch Einbeziehen des nunmehr geänderten Geschwindigkeitsverlaufs neu auf die Zeit abgebildet werden,
- muss eine neue Ermittlung der Grobbahn und der Feinbahn erfolgen und
- muss neu geprüft werden, ob alle Grenzwerte eingehalten werden.

Gegebenenfalls muss dieser Vorgang sogar mehrfach wiederholt werden, ehe ein halbwegs akzeptabler Geschwindigkeitsverlauf ermittelt werden kann, bei dem die Grobbahn und die Feinbahn derart ermittelt werden, dass für beide Antriebe alle Grenzwerte eingehalten werden. Die Ursache dafür, dass wiederholt iteriert werden muss, ohne mit Sicherheit vorhersagen zu können, ob die neu aufgefundenen Trajektorien die Grenzwerte einhalten, liegt darin, dass eine Änderung des Geschwindigkeitsverlaufs eine Änderung der Aufteilung der Anfangsbahn in die Grobbahn und die Feinbahn zur Folge hat.

Auch kann es bei dieser Vorgehensweise geschehen, dass die Bahngeschwindigkeit nur deshalb lokal oder global abgesenkt werden muss, weil eine ungünstige Aufteilung der Anfangsbahn auf die Grobbahn und die Feinbahn erfolgt ist. Mit anderen Worten: Wäre bei unverändertem Geschwindigkeitsverlauf die Aufteilung der Anfangsbahn auf die Grobbahn und die Feinbahn anders bestimmt worden, wären die Grenzwerte eingehalten worden.

Die gleiche Problematik stellt sich auch, wenn die Aufteilung der Anfangsbahn auf die Grobbahn und die Feinbahn vor der Prüfung erfolgt. Denn in diesem Fall kann die Prüfeinrichtung zwar sofort alle Lagesollwerte und deren zeitlichen Ableitungen auf Einhaltung der Grenzwerte überprüfen. Die gegebenenfalls erforderliche wiederholte Iterierung und das Problem der möglicherweise nur ungünstigen Aufteilung der Anfangsbahn auf die Grobbahn und die Feinbahn bleiben aber bestehen.

Die oben genannte Problematik ist auch durch die Vorgehensweise gemäß der EP 0 594 699 B1 nur.begrenzt umgehbar. Zunächst ist diese Vorgehensweise zum Einen sehr rechenintensiv, da für die gesamte Anfangsbahn der Beschleunigungsverlauf ermittelt werden muss und die Aufteilung der Anfangsbahn auf die Grobbahn und die Feinbahn anhand der Beschleunigungsanteile erfolgt. Weiterhin setzt diese Vorgehensweise zwingend voraus, dass der mögliche Verfahrweg des hochdynamischen Antriebs, die mögliche Beschleunigung des niederdynamischen Antriebs und die maximale Bahngeschwindigkeit entsprechend aufeinander abgestimmt sind. Ist diese Abstimmung nicht gewährleistet, weist auch die Vorgehensweise der EP 0 594 699 B1 die oben genannte Problematik auf. Weiterhin muss, wenn die Grenzwerte des hochdynamischen Antriebs verletzt werden, auch bei der EP 0 594 699 B1 nach dem Absenken der Bahngeschwindigkeit eine neue Ermittlung von Grobbahn und Feinbahn erfolgen, was dazu führen kann, dass andere, zuvor eingehaltene Grenzwerte verletzt werden.

Die Aufgabe der vorliegenden Erfindung besteht darin, ein Ermittlungsverfahren der eingangs genannten Art zu schaffen, mittels dessen die Grobbahn ohne wiederholtes Iterieren des Aufteilungs- und Prüfprozesses ermittelbar ist.

Die Aufgabe wird, ausgehend von einem Ermittlungsverfahren der eingangs genannten Art, dadurch gelöst,
- dass der skalare Bahnparameter von der Zeit verschieden ist und für einen entlang der Anfangsbahn zurückgelegten Weg charakteristisch ist,
- dass der Rechner die Anfangsbahn als Funktion des skalaren Bahnparameters einer Filterung mit Tiefpasscharakteristik unterzieht und so eine Grobfunktion ermittelt, so dass durch Einsetzen des skalaren Bahnparameters in die Grobfunktion jeweils eine korrespondierende Position auf der Grobbahn bestimmt ist,
- dass die Tiefpasscharakteristik auf den skalaren Bahnparameter bezogen ist und
- dass der Rechner die Grobfunktion derart ermittelt, dass der Abstand der Grobbahn von der Anfangsbahn unabhängig vom wert des skalaren Bahnparameters stets unterhalb einer vorbestimmten Schranke liegt.

Denn dadurch ist zum Einen bereits von vorneherein gewährleistet, dass der zulässige Verfahrbereich des hochdynamischen Antriebs (= die vorbestimmte Schranke) eingehalten wird. Vor allem aber ist die Aufteilung der Anfangsbahn in die Grobbahn und die Feinbahn nunmehr unabhängig von der Zeit. Eine Änderung der Bahngeschwindigkeit (lokal oder global) hat daher keinen Einfluss mehr auf die Aufteilung der Anfangsbahn in die Grobbahn und die Feinbahn. Es ist daher möglich,
a) zunächst anhand der Anfangsbahn die Grobbahn und die Feinbahn als Funktionen des skalaren Bahnparameters zu ermitteln,
b) sodann den skalaren Bahnparameter anhand der vorgegebenen Bahngeschwindigkeit in die Zeit umzusetzen und so die Grobbahn und die Feinbahn als Funktionen der Zeit zu ermitteln,
c) als nächstes in der Prüfeinrichtung die korrespondierenden Lagesollwerte und deren zeitlichen Ableitungen (Geschwindigkeiten, Beschleunigungen, Rucke) zu ermitteln,
d) die zeitlichen Ableitungen auf Einhaltung von deren Grenzwerten zu überprüfen und
e) im Falle der Verletzung der Grenzwerte die Bahngeschwindigkeit lokal oder global abzusenken und die Schritte b) und c) einmal (d.h. ein einziges Mal) zu wiederholen.

Eine weitergehende (d.h. mehrmalige) Iterierung ist hingegen nicht mehr erforderlich.

Die Ermittlung der Grobfunktion durch den Rechner kann auf verschiedene Art und Weise erfolgen. Bevorzugt ist, dass der Rechner zum Ermitteln der Grobfunktion
a) zunächst erste charakteristische Zwischenwerte der Anfangsbahn ermittelt,
b) anhand der zuletzt ermittelten ersten charakteristischen Zwischenwerte zweite charakteristische Zwischenwerte einer zweiten Zwischenbahn ermittelt, wobei die zweite Zwischenbahn einer auf den Bahnparameter bezogenen Filterung mit Tiefpasscharakteristik einer ersten Zwischenbahn entspricht, die durch die ersten charakteristischen Zwischenwerte definiert ist,
c) prüft, ob der Abstand der zweiten Zwischenbahn von der Anfangsbahn unabhängig vom Wert des skalaren Bahnparameters stets unterhalb der vorbestimmten Schranke liegt,
d) bejahendenfalls die ersten charakteristischen Zwischenwerte durch die zuletzt ermittelten zweiten charakteristischen Zwischenwerte ersetzt und zum Schritt b) zurück geht und
e) verneinendenfalls die Grobfunktion anhand der zuletzt ermittelten ersten charakteristischen Zwischenwerte ermittelt.

Denn dann kann durch allmählich fortschreitende Vergröberung bzw. allmählich fortschreitendes Verschleifen der Anfangsbahn nach und nach eine Grobfunktion ermittelt werden, bei der die Bedingung, dass der Abstand der Grobbahn von der Anfangsbahn unabhängig vom Wert des Bahnparameters stets unterhalb der vorbestimmten Schranke liegt, gerade noch erfüllt ist.

Die Formulierung im obigen Merkmal e), dass die Grobfunktion anhand der zuletzt ermittelten ersten charakteristischen Zwischenwerte ermittelt werden soll, wurde dabei bewusst so weit gefasst. Denn es ist zwar selbstverständlich möglich, dass die Grobfunktion den zuletzt ermittelten ersten charakteristischen Zwischenwerten entsprechen soll. Es soll aber beispielsweise auch möglich sein, die Anfangsbahn nur in einem ersten Abschnitt zu vergröbern, bis für diesen Abschnitt die Grobbahn ermittelt ist, danach in einem zweiten Abschnitt zu vergröbern usw., bis die Grobfunktion abschnittweise ermittelt ist. Auch eine derartige Vorgehensweise soll durch die Formulierung des Merkmals e) mit umfasst sein.

Zum Prüfen im Schritt c) ist es selbstverständlich möglich, dass der Rechner stets unmittelbar den Abstand der zweiten Zwischenbahn von der Anfangsbahn auf Einhalten der vorbestimmten Schranke prüft. In manchen Fällen wird es aber günstiger sein, insbesondere weniger Rechenzeit benötigen, wenn der Rechner
- im Schritt a) eine Hilfsschranke auf den Wert der vorbestimmten Schranke setzt,
- im Schritt c) prüft, ob der Abstand der zweiten Zwischenbahn von der ersten Zwischenbahn unabhängig vom Wert des skalaren Bahnparameters stets unterhalb der Hilfsschranke liegt, und
- im Schritt d) die Hilfsschranke um den maximalen Abstand der zweiten Zwischenbahn von der ersten Zwischenbahn verringert.

Optimal dürfte vermutlich sein, wenn der Rechner wie zuletzt beschrieben vorgeht und in dem Fall, dass der Abstand der zweiten Zwischenbahn von der ersten Zwischenbahn die Hilfsschranke übersteigt,
- zusätzlich unmittelbar den Abstand der zweiten Zwischenbahn von der Anfangsbahn auf Einhalten der vorbestimmten Schranke überprüft,
- nur dann, wenn der unmittelbare Abstand der zweiten Zwischenbahn von der Anfangsbahn die vorbestimmte Schranke übersteigt, zum Schritt e) übergeht und
- anderenfalls die Hilfsschranke gleich der Differenz von vorbestimmter Schranke und maximalem Abstand der zweiten Zwischenbahn von der Anfangsbahn setzt sowie die ersten charakteristischen Zwischenwerte durch die zuletzt ermittelten zweiten charakteristischen Zwischenwerte ersetzt und zum Schritt b) übergeht.

Die obenstehend beschriebenen Vorgehensweisen sind insbesondere dann vorteilhaft, wenn die ersten charakteristischen Zwischenwerte eine erste Sequenz von Zwischenvektoren bilden, die unter anderem Ortskoordinaten enthalten, die zweiten charakteristischen Zwischenwerte eine zweite Sequenz von Zwischenvektoren bilden, die unter anderem Ortskoordinaten enthalten, und die Anzahl von Zwischenvektoren der zweiten Sequenz kleiner als die Anzahl von Zwischenvektoren der ersten Sequenz ist. Denn dann ist das Vergröbern bzw. Verschleifen der Anfangsbahn bzw. der nach und nach ermittelten Zwischenbahnen besonders einfach zu realisieren.

Wenn der Rechner anhand der zweiten Sequenz von Zwischenvektoren eine dritte Sequenz von Zwischenvektoren ermittelt, die unter anderem Ortskoordinaten enthalten, die Zwischenvektoren der dritten Sequenz für die zweite Zwischenbahn charakteristisch sind und die Anzahl von Zwischenvektoren der drittem Sequenz der Anzahl von Zwischenvektoren der ersten Sequenz entspricht, ist es möglich, dass der Rechner den Abstand der zweiten Zwischenbahn von der ersten Zwischenbahn anhand der Ortskoordinaten der Zwischenvektoren der ersten und dritten Sequenz ermittelt. Es ist also möglich, dass der Rechner den Abstand der zweiten Zwischenbahn von der ersten Zwischenbahn ohne Ermittlung der vollständigen Zwischenbahnen ermittelt.

In analoger Weise ist es möglich, dass der Rechner den Abstand der zweiten Zwischenbahn von der Anfangsbahn anhand der Ortskoordinaten von Zwischenvektoren einer vierten Sequenz und den Zwischenvektoren der Anfangsbahn ermittelt. In diesem Fall ermittelt der Rechner anhand der zweiten Sequenz von zweiten Zwischenvektoren eine vierte Sequenz von Zwischenvektoren, wobei die Zwischenvektoren der vierten Sequenz unter anderem Ortskoordinaten enthalten und für die zweite Zwischenbahn charakteristisch sind, wobei die Anzahl von Zwischenvektoren der vierten Sequenz der Anzahl von Zwischenvektoren der Anfangsbahn entspricht.

Alternativ zur Ermittlung des Abstands anhand von charakteristischen Zwischenwerten kann der Rechner die Grobfunktion auch dadurch ermitteln, dass er für jeden vorgegebenen Wert des skalaren Bahnparameters die korrespondierende Postition auf der Grobbahn durch einen gewichteten oder ungewichteten Mittelwert von Positionen auf der Anfangsbahn bestimmt, wobei die Positionen auf der Anfangsbahn mit einem Intervall des skalaren Bahnparameters korrespondieren, das den vorgegebenen Wert des skalaren Bahnparameters enthält.

Wenn die Anfangsbahn und die Grobbahn sowie etwaige im Rahmen der Ermittlung der Grobbahn ermittelte Zwischenbahnen Splines sind, ist das erfindungsgemäße Ermittlungsverfahren besonders einfach auszuführen. Als geeignete Splines kommen insbesondere B-Splines in Frage.

In aller Regel ermittelt der Rechner zusätzlich zur Grobbahn auch eine ebenfalls lagegeführt abzufahrende Feinbahn. Der Rechner kann die Feinbahn dabei alternativ durch Differenzbildung von Anfangsbahn und Grobbahn oder durch Differenzbildung von Anfangsfunktion und Grobfunktion nebst Einsetzen des skalaren Bahnparameters ermitteln.

Auf Grund der Art der Ermittlung der Grobfunktion erfolgt eine feinfühlige Aufteilung der Anfangsbahn auf die Grobbahn und die Feinbahn. Insbesondere erfolgt die Ermittlung der Grobbahn derart, dass mindestens ein Wert des skalaren Bahnparameters existiert, bei dem eine Ableitung der Grobfunktion nach dem skalaren Bahnparameter sowohl von Null als auch von einer korrespondierenden Ableitung der Anfangsfunktion nach dem skalaren Bahnparameter verschieden ist. Bei jedem derartigen Wert erfolgt also in der Zeitdomäne ein simultanes Ansteuern sowohl des korrespondierenden niederdynamischen Antriebs als auch des korrespondierenden hochdynamischen Antriebs mit einer von Null verschiedenen Verfahrgeschwindigkeit.

Es ist möglich, dass das erfindungsgemäße Ermittlungsverfahren online ausgeführt wird. In diesem Fall ist der Rechner in eine Steuereinrichtung für eine Maschine mit einer redundanten lagegeführten Kinematik integriert. Alternativ ist es auch möglich, dass das erfindungsgemäße Ermittlungsverfahren offline ausgeführt wird. In diesem Fall können-mindestens zwei der drei Lagesollwerte für die Anfangsbahn, die Grobbahn und die Feinbahn in einem Datenträger hinterlegt werden. Wenn die Lagesollwerte der Bahnen bereits auf den Arbeitstakt der Steuereinrichtung bezogen sind, können gegebenenfalls auch deren zeitliche Ableitungen in dem Datenträger mit hinterlegt werden. Wenn dies getan wird, ist auf Seiten der Steuereinrichtung keine Interpolation mehr erforderlich, sondern lediglich noch das Abarbeiten der Folgen von Lagesollwerten.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung:
- FIG 1: schematisch eine Anfangsbahn, eine Grobbahn und eine Bearbeitungsmaschine,
- FIG 2: einen Rechner und zwei Datenträger,
- FIG 3 und 4: Ablaufdiagramme,
- FIG 5: einen Abschnitt einer Anfangsbahn, und einen korrespondierenden Abschnitt einer Grobbahn sowie
- FIG 6 bis 10: Ablaufdiagramme.

Die vorliegende Erfindung wird nachfolgend in Verbindung mit einer Bearbeitungsmaschine für Metall geschildert. Diese Schilderung ist aber rein beispielhaft zu verstehen. Auch wird die vorliegende Erfindung anhand einer zweidimensionalen Verfahrbewegung geschildert. Auch dies ist aber nur rein beispielhaft. Entscheidend kommt es weder auf die konkrete Anwendung und die Ausgestaltung der Maschine noch auf die Anzahl der Dimensionen der Verfahrbewegung an, sondern nur auf die nachfolgend beschriebene Art und Weise der Ermittlung einer lagegeführt abzufahrenden Grobbahn anhand einer lagegeführt abzufahrenden Anfangsbahn.

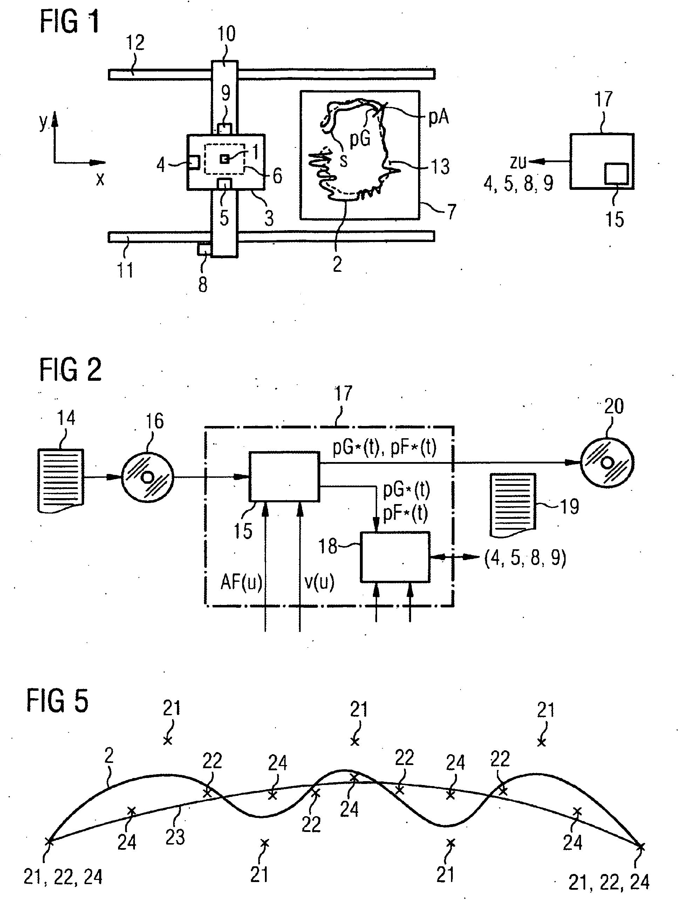

Gemäß FIG 1 soll beispielsweise ein Laser 1 in der xy-Ebene exakt entlang einer Anfangsbahn 2 lagegeführt verfahren werden. Der Laser 1 emittiert einen Lichtstrahl senkrecht zur xy-Ebene, so dass mittels des emittierten Lichtstrahls beispielsweise durch Schneiden oder Beschriften ein Metall barbeitet werden kann. Der Laser 1 ist auf einem Verstellelement 3 angeordnet. Dem Verstellelement 3 sind zwei hochdynamische Antriebe 4, 5 zugeordnet. Mittels je eines der hochdynamischen Antriebe 4, 5 ist der Laser 1 relativ zum Verstellelement 3 in x-Richtung bzw. y-Richtung verfahrbar. Der Verfahrweg des Lasers 1 relativ zum Verstellelement 3 ist aber sowohl in x-Richtung als auch in y-Richtung relativ klein. Rein beispielhaft sei angenommen, dass der Laser 1 für beide Richtungen x, y eine maximale Beschleunigung von z. B. 30 m/s² und einen Verfahrweg von z. B. 5 cm aufweist. Dieser maximale Verfahrweg ist schematisch in FIG 1 durch ein gestricheltes Viereck 6 angedeutet.

Ein von dem Laser zu bearbeitendes Werkstück 7 weist in aller Regel erheblich größere Abmessungen auf. Daher ist eine weitere Verstellmöglichkeit in x-Richtung und in y-Richtung vorgesehen, wobei diese weitere Verstellmöglichkeit einen erheblich größeren Verfahrweg aufweist, beispielsweise von 3 m x 5 m. Die weitere Verstellmöglichkeit ist aber erheblich träger. Beispielsweise sind zwei niederdynamische Antriebe 8, 9 vorgesehen, welche eine maximale Beschleunigung von 1 m/s² in x-Richtung und von 3 m/s² in y-Richtung ermöglichen. Beispielsweise kann das Verstellelement 3 mittels des niederdynamischen Antriebs 9 auf einem Träger 10 in y-Richtung verfahrbar sein, der Träger 10 wiederum mittels des niederdynamischen Antriebs 8 auf Schienen 11, 12 in x-Richtung.

Um die gegebene Anfangsbahn-2 so schnell wie möglich durchfahren zu können, müssen die Verfahrbewegungen des Trägers 10, des Verstellelements 3 und des Lasers 1 geeignet miteinander koordiniert werden. Es muss also eine Grobbahn 13 für das Verfahren von Träger 10 und Verstellelement 3 ermittelt werden, die einer vergröberten, verschliffenen Abwandlung der Anfangsbahn 2 entspricht. Der mögliche Verfahrweg 6 des Lasers 1 relativ zum Verstellelement 3 muss dabei beachtet werden. Die Abweichung der Grobbahn 13 von der Anfangsbahn 2 muss also durch ein entsprechendes Verfahren des Lasers 1 relativ zum Verstellelement 3 ausgeglichen werden können. Die Ermittlung der Grobbahn 13 - beispielhaft in FIG 1 mit eingezeichnet - ist Kerngegenstand der vorliegenden Erfindung.

Weiterhin müssen die Geschwindigkeits-, Beschleunigungs- und gegebenenfalls auch Ruckbegrenzungen aller Antriebe 4, 5, 8, 9 eingehalten werden. Dies ist zwar ebenfalls Bestandteil der vorliegenden Erfindung in ihren Weiterentwicklungen. Es ist aber nicht mehr Grundbestandteil der vorliegenden Erfindung.

Zur Realisierung der vorliegenden Erfindung wird zunächst ein Computerprogramm 14 für einen Rechner 15 erstellt. Dieses Computerprogramm 14 wird in (ausschließlich) maschinenlesbarer Form auf einem Datenträger 16 gespeichert. Der Datenträger 16 kann beispielsweise ein interner Datenträger eines nicht dargestellten weiteren Rechners oder aber ein transportabler Datenträger 16 wie beispielsweise eine CD-ROM 16, eine Speicherkarte oder ein USB-Memory-Stick sein.

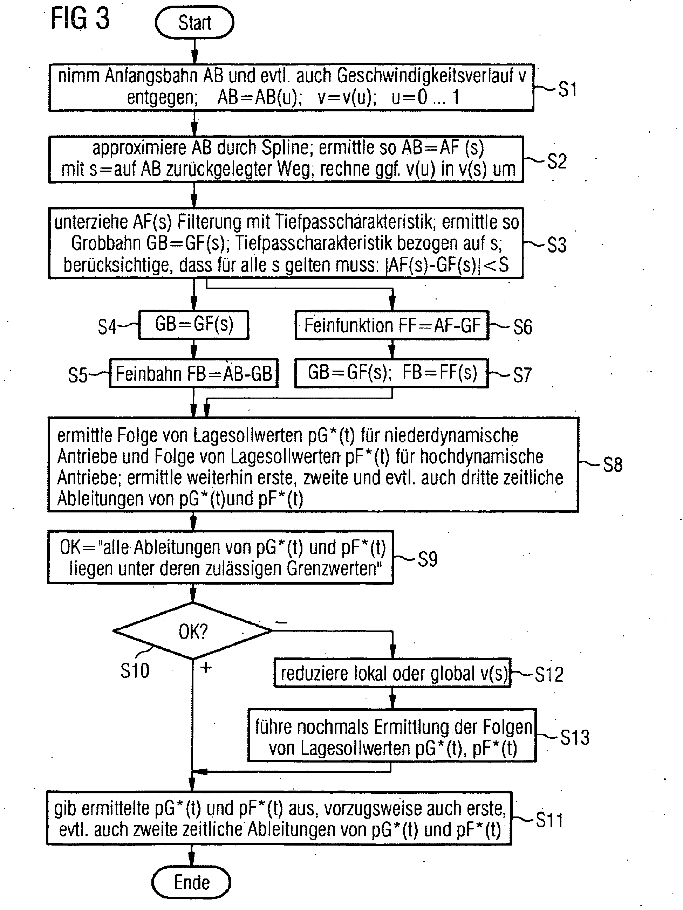

Das Computerprogramm 14 wird in den Rechner 15 geladen und dort gespeichert, beispielsweise auf dessen Festplatte. Wird es auf Grund entsprechender Aufrufbedingungen (z.B. eine Benutzereingabe) aufgerufen, führt der Rechner 15 ein Ermittlungsverfahren aus, das nachfolgend in Verbindung mit den FIG 3 bis 10 näher erläutert wird. Der Rechner 15 ist durch das Computerprogramm 14 also derart programmiert (bzw. allgemeiner ausgebildet), dass er ein derartiges Ermittlungsverfahren ausführt.

Gemäß FIG 3 wird dem Rechner 15 in einem Schritt S1 die Anfangsbahn 2 vorgegeben. Beispielsweise wird dem Rechner 15 ein Teileprogramm gemäß DIN 66025 vorgegeben. In diesem Fall wird dem Rechner 15 zusätzlich zur Anfangsbahn 2 auch ein Geschwindigkeitsverlauf v vorgegeben, mit dem die Anfangsbahn 2 abgefahren werden soll. Unabhängig davon, ob dem Rechner 15 zusätzlich zur Anfangsbahn 2 auch der Geschwindigkeitsverlauf v mit vorgegeben wird oder nicht, ist die vorgegebene Anfangsbahn 2 aber in der Regel durch eine Anfangsfunktion AF beschrieben, so dass durch Einsetzen eines skalaren Bahnparameters u in die Anfangsfunktion AF jeweils eine korrespondierende Position pA auf der Anfangsbahn 2 bestimmt ist. Gleiches gilt gegebenenfalls auch für den Geschwindigkeitsverlauf v, falls dieser nicht vorgegeben ist.

Der skalare Bahnparameter u ist in der Regel zunächst ein universeller Bahnparameter u. Der universelle Bahnparameter u ist dimensionslos und somit insbesondere von der Zeit t verschieden. Er ist aber - und zwar unabhängig vom Geschwindigkeitsverlauf v - in einen entlang der Anfangsbahn 2 zurückgelegten Verfahrweg s umrechenbar. Er ist daher bereits für den Verfahrweg s charakteristisch.

Soweit erforderlich approximiert der Rechner 15 in einem Schritt S2 die Anfangsbahn 2 durch einen Spline, beispielsweise durch einen B-Spline, insbesondere einen B-Spline dritter Ordnung, oder einen Bezier-Spline. Der guten Ordnung halber sei dabei erwähnt, dass ein B-Spline dritter Ordnung eine abschnittweise zusammengesetzte glatte Kurve ist, wobei jeder Abschnitt der glatten Kurve durch eine Beziehung as³ + bs² + es + d beschreibbar ist. Die Buchstaben a, b, c und d stehen dabei jeweils für einen Vektor im Ortsraum. s ist der bereits erwähnte Verfahrweg s auf der Anfangsbahn 2.

Durch die Approximierung der Anfangsbahn 2 durch einen Spline steht dem Rechner 15 im Ergebnis eine Anfangsfunktion AF (nämlich der Spline) zur Verfügung, die direkt eine Funktion des entlang der Anfangsbahn 2 zurückgelegten Weges s ist. Falls auch der Geschwindigkeitsverlauf v mit vorgegeben ist, kann auch dieser im Rahmen des Schrittes S2 in einen Geschwindigkeitsverlauf v als Funktion des entlang der Anfangsbahn 2 zurückgelegten Weges s umgerechnet werden.

Die Vorgehensweise gemäß den Schritten S1 und S2 ist Fachleuten allgemein bekannt. Sie wird insbesondere auch dann ergriffen, wenn die Anfangsbahn 2 nur mittels der Grobantriebe 8, 9 für die x-Richtung und die y-Richtung angefahren werden müsste, gemäß obigem Bespiel der Laser 1 relativ zum Verstellelement 3 also starr angeordnet wäre. Nähere Erläuterungen zu den Schritten S1 und S2 sind daher nicht erforderlich.

In einem Schritt S3 unterzieht der Rechner 15 die Anfangsfunktion AF einer Filterung mit Tiefpasscharakteristik. Entscheidend ist dabei, dass die Anfangsfunktion AF, wenn sie gefiltert wird, nicht als Funktion der Zeit t vorgegeben ist, sondern als Funktion des universellen Bahnparameters u oder des Verfahrwegs s. Bevorzugt ist, dass die Anfangsfunktion AF direkt eine Funktion des entlang der Anfangsbahn 2 zurückgelegten Wegs s ist. Nachfolgend wird daher stets auch der Verfahrweg s als skalarer Bahnparameter bezeichnet. Es könnte aber auch der dimensionslose universelle Bahnparameter u verwendet werden.

Korrespondierend zu dem Umstand, dass die Anfangsfunktion AF nicht eine Funktion der Zeit t, sondern eine Funktion des skalaren Bahnparameters u ist, ist auch die Tiefpasscharakteristik nicht auf die Zeit t bezogen, sondern auf den skalaren Bahnparameter u.

Im Schritt S3 ermittelt der Rechner 15 somit eine Grobfunktion GF als Funktion eben des skalaren Bahnparameters u. Durch ein Einsetzen des skalaren Bahnparameters u in die Grobfunktion GF ist somit eine korrespondierende Position pG auf der Grobbahn 13 bestimmt, die mit der Position pA auf der Anfangsbahn 2 korrespondiert, die durch denselben Wert des skalaren Bahnparameters u bestimmt ist.

Die Filterung der Anfangsfunktion AF darf selbstverständlich nicht zu grob sein. Denn sie muss derart erfolgen, dass der Abstand der Grobbahn 13 von der Anfangsbahn 2 unabhängig vom Wert des skalaren Bahnparameters u stets unterhalb einer vorbestimmten Schranke S bleibt. Wie dies erreicht werden kann, wird später noch detailliert erläutert werden.

Nach dem Schritt S3 können Schritte S4 und S5 ausgeführt werden. Im Schritt S4 ermittelt der Rechner 15 anhand der Grobfunktion GF die Grobbahn 13. Im Schritt S5 ermittelt der Rechner 15 durch Differenzbildung von Anfangsbahn 2 und Grobbahn 13 eine Feinbahn. Die Feinbahn ist dabei - ebenso wie die Anfangsbahn 2 und die Grobbahn 13 - lagegeführt abzufahren.

Alternativ zu den Schritten S4 und S5 könnte der Rechner 15 auch Schritte S6 und S7 ausführen. Im Schritt S6 ermittelt der Rechner 15 durch Differenzbildung von Anfangsfunktion AF und Grobfunktion GF eine Feinfunktion FF. Im Schritt S7 ermittelt der Rechner 15 anhand der Grobfunktion GF die Grobbahn 13 und anhand der Feinfunktion FF die Feinbahn.

In einem Schritt S8 führt der Rechner 15 sodann - getrennt für die Grobbahn 13 und die Feinbahn - eine an sich bekannte Ermittlung durch. Denn er ermittelt im Schritt S8 in an sich bekannter Weise die Grobbahn 13 und die Feinbahn als Funktionen der Zeit t. Er ermittelt somit anhand der Grobbahn 13 eine Folge von Lagesollwerten pG*(t) für die niederdynamischen Antriebe 8, 9 und anhand der Feinbahn eine korrespondierende Folge von Lagesollwerten pF*(t) für die hochdynamischen Antriebe 4, 5. Unmittelbar aufeinander folgende Lagesollwerte pG*(t), pF*(t) sind dabei um einen vorbestimmten Zeittakt versetzt auszuführen. Die ermittelten Lagesollwerte pG*(t), pF*(t) speichert der Rechner 15 zunächst intern ab. Je nach anzahl der anzusteuernden Achsen können die Lagesollwerte pG* (t), pF* (t) dabei skalare Größen (eindimensionaler Fall) oder mehrdimensionale Größen (mehrdimensionaler Fall) sein.

Im Rahmen des Schrittes S8 ermittelt der Rechner 15 weiterhin zumindest die ersten und zweiten Ableitungen der Lagesollwerte pG*(t), pF*(t) nach der Zeit t. Er ermittelt also zumindest die Geschwindigkeiten und die Beschleunigungen. Eventuell ermittelt er im Rahmen des Schrittes S8 auch die dritten Ableitungen der Lagesollwerte pG*(t), pF*(t) nach der Zeit t, also die Rucke.

In einem Schritt S9 ermittelt der Rechner 15 sodann den Wert einer logischen Variable OK. Die logische Variable OK nimmt den Wert "WAHR" an, wenn die im Schritt S8 ermittelten zeitlichen Ableitungen alle unterhalb der für sie zulässigen Grenzwerte liegen. Anderenfalls nimmt die logische Variable OK den Wert "UNWAHR" bzw. "FALSCH" an. Den Wert der logischen Variable OK prüft der Rechner 15 in einem Schritt S10 ab.

Wenn die logische Variable OK den Wert "WAHR" angenommen hat, geht der Rechner 15 direkt zu einem Schritt S11 über. Im Schritt S11 gibt der Rechner 15 die ermittelten Lagesollwerte pG*(t), pF*(t) aus. Vorzugsweise gibt der Rechner 15 auch die korrespondierenden Geschwindigkeitswerte (= erste zeitliche Ableitungen) mit aus. Eventuell kann der Rechner 15 auch die korrespondierenden Beschleunigungswerte (= zweite zeitliche Ableitungen) mit ausgeben.

Wenn der Rechner 15 das obenstehend beschriebene Ermittlungsverfahren online ausführt, ist er in eine Steuereinrichtung 17 für die Bearbeitungsmaschine integriert. In diesem Fall gibt der Rechner 15 die Folgen von Lagesollwerten pG*(t), pF*(t), die korrespondierenden Geschwindigkeitswerte und eventuell auch die korrespondierenden Beschleunigungswerte direkt an Regeleinrichtungen 18 für die entsprechenden Antriebe 4, 5, 8, 9 aus. Wenn der Rechner 15 das obenstehend beschriebene Ermittlungsverfahren hingegen offline ausführt, speichert der Rechner 15 die Folgen von Lagesollwerten pG*(t), pF*(t), die korrespondierenden Geschwindigkeitswerte und eventuell auch die korrespondierenden Beschleunigungswerte als Datei 19 auf einem Datenträger 20 ab. Der Datenträger 20 kann wieder ein interner Datenträger des Rechners 15 sein, beispielsweise eine Restplatte des Rechners 15. Er kann aber auch ein transportabler Datenträger 20 wie beispielsweise eine CD-ROM 20, eine Speicherkarte oder ein USB-Memory-Stick sein.

Theoretisch könnte der Rechner 15 für zwei beliebige der Bahnen Anfangsbahn 2, Grobbahn 13 und Feinbahn deren Lagesollwerte pG*(t), pF*(t) (gegebenenfalls einschließlich der Ableitungen für die Lagesollwerte) abspeichern, da sowohl für die Lagesollwerte pG*(t), pF*(t) als auch für die Ableitungen gilt, dass sich der Wert für die Anfangsbahn 2 als Summe der Werte für die Grobbahn 13 und die Feinbahn ergeben muss. Wenn zwei der Werte gegeben sind, ist der dritte Wert also sofort durch Summen- oder Differenzbildung ermittelbar. Unabhängig von der konkreten Ausgestaltung, also unabhängig davon, für welche der Bahnen Anfangsbahn 2, Grobbahn 13 und Feinbahn die Lagesollwerte pG*(t), pF*(t) auf dem Datenträger 20 hinterlegt werden, gilt also, dass auf dem Datenträger 20 (mindestens) zwei Folgen von Lagesollwerten pG*(t), pF*(t) gespeichert sind, wobei jeder Lagesollwert pG*(t) der einen Folge mit einem Lagesollwert pF*(t) der anderen Folge korrespondiert und je eine der Folgen einer Folge von Sollpositionen auf der Anfangsbahn 2, der Grobbahn 13 oder der Feinbahn.entspricht.

Wenn die Prüfung im Schritt S10 hingegen ergeben hat, dass die logische Variable OK den Wert "UNWAHR" bzw. "FALSCH" aufweist, darf der Schritt S11 nicht direkt ausgeführt werden. Stattdessen müssen zuvor Schritte S12 und S13 ausgeführt werden.

Im Schritt S12 senkt der Rechner 15 den Geschwindigkeitsverlauf v ab. Das Absenken des Geschwindigkeitsverlaufs v kann dabei lokal vorgenommen werden, also nur in den Bereichen des Verfahrweges s, an denen eine oder mehrere der Ableitungen) der Lagesollwerte pG*(t), pF*(t) die zulässigen Grenzwerte überschreiten. Die Absenkung kann aber auch global vorgenommen werden, also über den gesamten Verfahrweg s. Das Ausmaß der erforderlichen Geschwindigkeitsabsenkung ist ohne weiteres anhand des Ausmaßes ermittelbar, um das die Ableitungen der Lagesollwerte pG*(t), pF*(t) die zulässigen Grenzwerte überschreiten. Im Schritt S13 kann der Rechner 15 daher erneut eine Ermittlung im Sinne des Schrittes S8 durchführen, wobei bei der Ausführung des Schrittes S13 aber gewährleistet ist, dass nunmehr alle Grenzwerte eingehalten werden.

In der Praxis wird die Ausführung des Schrittes S13 vorzugsweise dadurch realisiert, dass anstelle der Ausführung.des Schrittes S13 als solchem zum Schritt S8 zurückgesprungen wird. Die Darstellung gemäß FIG 3 bringt aber deutlicher den wesentlichen Vorteil der vorliegenden Erfindung zum Ausdruck: Denn dadurch, dass die im Schritt S3 ermittelte Grobbahn 13 - und mit ihr auch die Feinbahn - trotz der Änderung des Geschwindigkeitsverlaufs v erhalten bleibt, ist keine mehrfache Iteration mit einem vorsichtigen Herantasten an eine geeignete Aufteilung in Grobbahn 13 und Feinbahn erforderlich. Vielmehr ist nur eine einmalige Aufteilung der Anfangsbahn 2 in Grobbahn 13 und Feinbahn nebst gegebenenfalls einmaliger Korrektur des Geschwindigkeitsverlaufs v erforderlich.

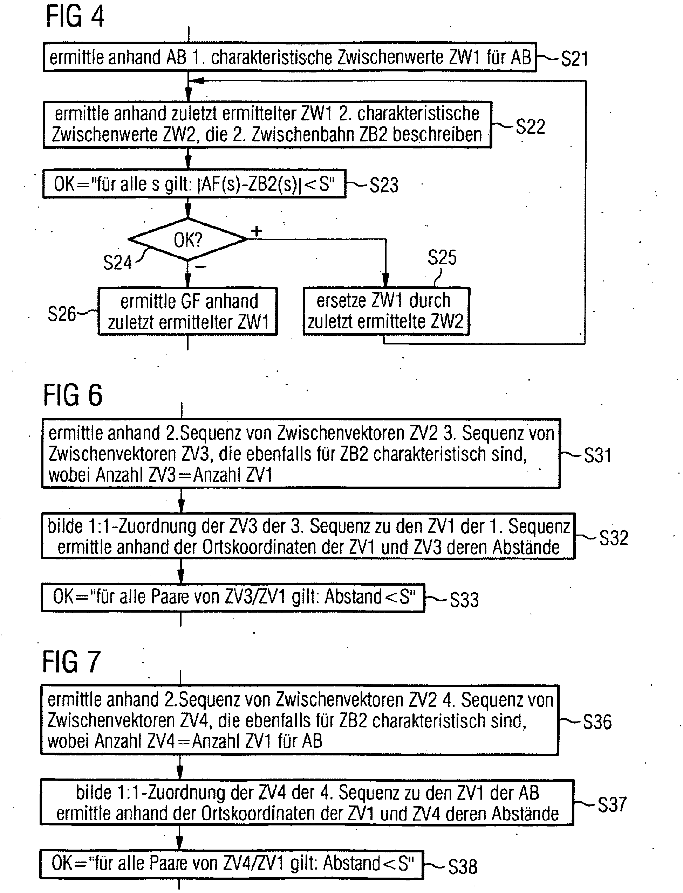

Nachfolgend wird in Verbindung mit FIG 4 beispielhaft ein bevorzugtes Verfahren zur Ermittelung der Grobbahn 13 näher erläutert. Bereits vorab sei aber darauf hingewiesen, dass das nachfolgend beschriebene Verfahren zwar bevorzugt ist. Es ist aber nicht das einzig mögliche Verfahren.

Gemäß FIG 4 ermittelt der Rechner 15 in einem Schritt S21 anhand der Anfangsbahn 2 zunächst erste charakteristische Zwischenwerte. Die ersten charakteristischen Zwischenwerte bilden dabei eine erste Sequenz von Zwischenvektoren. Die Zwischenvektoren der ersten Sequenz enthalten gemäß FIG 5 Ortskoordinaten von sogenannten Kontrollpunkten 21 der Anfangsbahn 2 und die korrespondierenden Knotenwerte der Kontrollpunkte 21. Die Ermittlung der Kontrollpunkte 21 und auch die Ermittlung der korrespondierenden Knotenwerte von Splines - und die Anfangsbahn 2 ist ein Spline, siehe Schritt S2 von FIG 3 - ist Fachleuten allgemein bekannt und z. B. in dem Fachbuch "A Practical Guide to Splines" von Carl de Boor, Springer-Verlag 1978, beschrieben.

Anhand der ersten charakteristischen Zwischenwerte ermittelt der Rechner 15 in einem Schritt S22 zweite charakteristische Zwischenwerte. Die zweiten charakteristischen Zwischenwerte bildern eine zweite Sequenz von Zwischenvektoren. Die Zwischenvektoren der zweiten Sequenz enthalten gemäß FIG 5 die Ortskoordinaten von Kontrollpunkten 22 und die korrespondierenden Knotenwerte für eine zweite Zwischenbahn 23. Der erste Zwischenvektor der ersten Sequenz und der letzte Zwischenvektor der ersten Sequenz werden dabei unverändert als erster bzw. letzter Zwischenvektor in die zweite Sequenz übernommen. Die Ortskoordinaten der übrigen Zwischenvektoren der zweiten Sequenz werden beispielsweise durch gewichtete oder ungewichtete Mittelwertbildung von je zwei unmittelbar aufeinander folgenden Zwischenvektoren der ersten Sequenz ermittelt, siehe ebenfalls FIG 5. Die Ermittlung der korrespondierenden Knotenwerte ist jedem Fachmann geläufig und beispielsweise in dem Fachaufsatz "Inserting New Knots into B-Spline Curves" von W. Boehm, IPC Business Press 1980, beschrieben.

Die zweite Zwischenbahn 23 ist somit ebenfalls ein Spline gleicher Art wie die Anfangsbahn 2, beispielsweise also wieder ein B-Spline. Gemäß FIG 5 ist die Anzahl von Zwischenvektoren der zweiten Sequenz, also die Anzahl der zweiten charakteristischen Zwischenwerte, aber kleiner als die Anzahl von Zwischenvektoren der ersten Sequenz. Hiermit korrespondierend ist die zweite Zwischenbahn 23, die durch die zweite Sequenz von Zwischenvektoren bestimmt ist, auf den skalaren Bahnparameter u bezogen eine Filterung mit Tiefpasscharakteristik der Anfangsbahn 2.

In Schritten S23 und S24 prüft der Rechner 15, ob der Abstand der zweiten Zwischenbahn 23 von der Anfangsbahn 2 unabhängig vom Wert des skalaren Bahnparameters u stets unterhalb der vorbestimmten Schranke S liegt. Wenn dies der Fall ist, ersetzt der Rechner 15 in einem Schritt S25 die ersten charakteristischen Zwischenwerte durch die zweiten charakteristischen Zwischenwerte und geht zum Schritt S22 zurück. Anderenfalls ermittelt der Rechner 15 in einem Schritt S26 anhand der ersten Zwischenwerte die Grobfunktion GF. Da die Grobfunktion GF somit entweder anhand der ersten charakteristischen Zwischenwerte der Anfangsbahn 2 oder - wegen des Schrittes S25 - anhand der zweiten charakteristischen Zwischenwerte einer zweiten Zwischenbahn 23 ermittelt wird, ist auch die anhand der Grobfunktion GF ermittelte Grobbahn 13 ein Spline.

Der Abstand der zweiten Zwischenbahn 23 von der Anfangsbahn 2 wird vom Rechner 15 vorzugsweise separat für die x-Richtung und die y-Richtung bestimmt. Es wäre aber auch die Ermittlung eines geometrischen Abstands gemäß der Formel a² = δx² + δy² (mit δx = Abstand in x-Richtung und δy = Abstand in y-Richtung) möglich.

Um entsprechend dem Schritt S23 zu prüfen, ob der Abstand der zweiten Zwischenbahn 23 von der Anfangsbahn 2 unabhängig-vom Wert des skalaren Bahnparameters u stets unterhalb der vorbestimmten Schranke S liegt, ist es prinzipiell selbstverständlich möglich, für eine hinreichend dichte Folge von Werten des skalaren Bahnparameters u jeweils den Abstand der zweiten Zwischenbahn 23 von der Anfangsbahn 2 zu ermitteln und den größten dieser Abstände mit der vorbestimmten Schranke S zu vergleichen. Diese Vorgehensweise ist aber sehr rechenintensiv. Erheblich eleganter ist folgende Implementierung des Schrittes S23:

Entsprechend dem Algorithmus von Boehm (zu finden beispielsweise in dem oben erwähnten Fachaufsatz von Boehm) ermittelt der Rechner 15 gemäß FIG 6 in einem Schritt S31 anhand der zweiten Sequenz von Zwischenvektoren eine dritte Sequenz von Zwischenvektoren. Auch die Zwischenvektoren der dritten Sequenz enthalten - siehe wieder FIG 5 - unter anderem Ortskoordinaten von Kontrollpunkten 24. Sie sind-dritte charakteristische Zwischenwerte für dieselbe zweite Zwischenbahn 23, welche auch durch die zweiten charakteristischen Zwischenwerte beschrieben ist. Die Anzahl von Zwischenvektoren der dritten Sequenz entspricht gemäß FIG 5 aber der Anzahl von Zwischenvektoren der ersten Sequenz. Der Rechner 15 kann daher in einem Schritt S32 eine 1:1-Zuordnung der Zwischenvektoren der ersten Sequenz zu den Zwischenvektoren der dritten Sequenz bilden. Ebenfalls im Schritt S32 kann der Rechner 15 somit für jedes derartige Paar von Zwischenvektoren anhand von deren Ortskoordinaten-den Abstand dieser beiden Zwischenvektoren voneinander ermitteln. Der Maximalwert dieser Abstände stellt bei B-Splines - dies ist Fachleuten allgemein bekannt - eine obere Grenze für den Abstand der korrespondierenden Splines dar, hier also der korrespondierenden Bahnen 2, 23. Es ist daher möglich, dass der Rechner 15 in einem Schritt 33 die logische Variable OK dadurch ermittelt, dass er lediglich den Maximalwert der im Schritt S32 ermittelten Abstände mit der vorbestimmten Schranke S vergleicht.

Bei der ersten Iteration der FIG 4 - wenn also die ersten charakteristischen Zwischenwerte mit der Anfangsbahn 2 korrespondieren, wird im Rahmen des Schrittes S23 die zweite Zwischenbahn 23 stets mit der Anfangsbahn 2 verglichen bzw. werden im Rahmen des Schrittes S33 stets die Ortskoordinaten der entsprechenden Zwischenvektoren miteinander verglichen. Bei späteren Iterationen, wenn also die ersten charakteristischen Zwischenwerte nicht mehr mit der Anfangsbahn 2, sondern mit einer eigenen Zwischenbahn (nachfolgend erste Zwischenbahn genannt) korrespondieren, sind verschiedene Vorgehensweisen möglich, diese Vorgehensweisen werden nachstehend erläutert.

So ist es gemäß FIG 7 beispielsweise möglich, dass der Rechner 15 zur Implementierung des Schrittes S23 in einem Schritt S36 anhand der zweiten Sequenz von Zwischenvektoren eine vierte Sequenz von Zwischenvektoren ermittelt, wobei die Anzahl von Zwischenvektoren der vierten Sequenz der Anzahl von Zwischenvektoren für die Anfangsbahn 2 entspricht und die vierte Sequenz von Zwischenvektoren für die zweite Zwischenbahn 23 charakteristisch ist. Die Zwischenvektoren der vierten Sequenz können beispielsweise durch entsprechend häufige Wiederholung des Schrittes S31 von FIG 6 ermittelt werden. In einem Schritt S37 kann der Rechner- analog zum Schritt S32 von FIG 6- eine 1:1-Zuordnung der Zwischenvektoren der vierten Sequenz zu den Zwischenvektoren für die Anfangsbahn 2 vornehmen und anhand der Ortskoordinaten der Zwischenvektorpaare deren Abstände ermitteln. In einem Schritt S38 ermittelt der Rechner 15 den Wert der logischen Variablen OK, und zwar analog zum Schritt S33 von FIG 6 dadurch, dass er prüft, ob der Maximalwert der im Schritt S37 ermittelten Abstände kleiner als die vorbestimmte Schranke S ist.

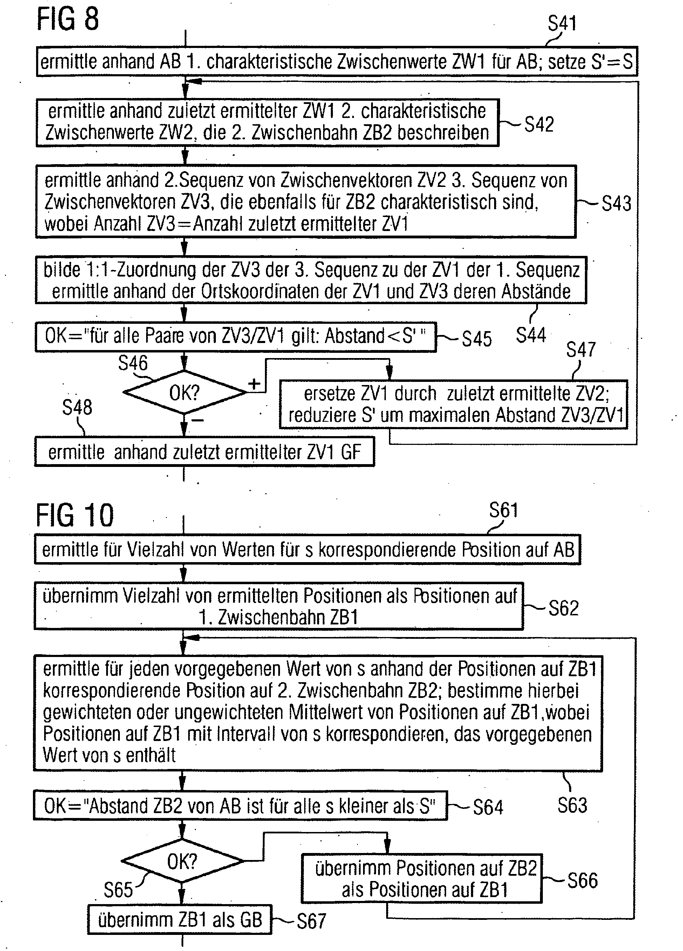

Bei der Vorgehensweise gemäß FIG 7 prüft der Rechner 15 also stets unmittelbar den Abstand der zweiten Zwischenbahn 23 von der Anfangsbahn 2 auf Einhalten der vorbestimmten Schranke S ab. Alternativ zu dem direkten Vergleich der zweiten Zwischenbahn 23 mit der Anfangsbahn 2 (bzw. der korrespondierenden Zwischenvektoren miteinander) ist es gemäß FIG 8 aber auch möglich, die Vorgehensweise von FIG 4 etwas zu modifizieren.

Gemäß FIG 8 ermittelt der Rechner 15 in einem Schritt S41 zunächst anhand der Anfangsbahn 2 deren charakteristische ersten Zwischenwerte. Insoweit korrespondiert der Schritt S41 mit dem Schritt S21 von FIG 4. Zusätzlich setzt der Rechner 15 im Schritt S41 aber eine Hilfsschranke S' auf den Wert der vorbestimmten Schranke S.

Ein Schritt S42 entspricht dem Schritt S22 von FIG 4. Schritte S43 und S44 entsprechen den Schritten S31 und S32 von FIG 6. Von einer Detailerläuterung zu den Schritten S42 bis S44 kann daher abgesehen werden.

In einem Schritt S45 ermittelt der Rechner 15 den Wert der logischen Variablen OK. Der Schritt S45 korrespondiert im Wesentlichen mit dem Schritt S33 von FIG 6. Im Unterschied zum Schritt S33 von FIG 6 werden die im Schritt S44 ermittelten Abstände aber nicht mit der vorbestimmten Schranke S verglichen, sondern mit der im Schritt S41 definierten Hilfsschranke S'.

Schritte S46 bis S48 entsprechen im Wesentlichen den Schritten S24 bis S26 von FIG 4. Der einzige Unterschied zu den Schritten S24 bis S26 von FIG 4 besteht darin, dass im Schritt S47 von FIG 8 zusätzlich auch der Wert der Hilfsschranke S' neu ermittelt wird. Denn er wird um den maximalen Abstand der Zwischenvektoren voneinander verringert.

Die Vorgehensweise von FIG 8 hat gegenüber der Vorgehensweise von FIG 7 den Vorteil, dass sie erheblich recheneffizienter ist. Auf diese Weise kann somit die Grobbahn 13 schneller ermittelt werden.

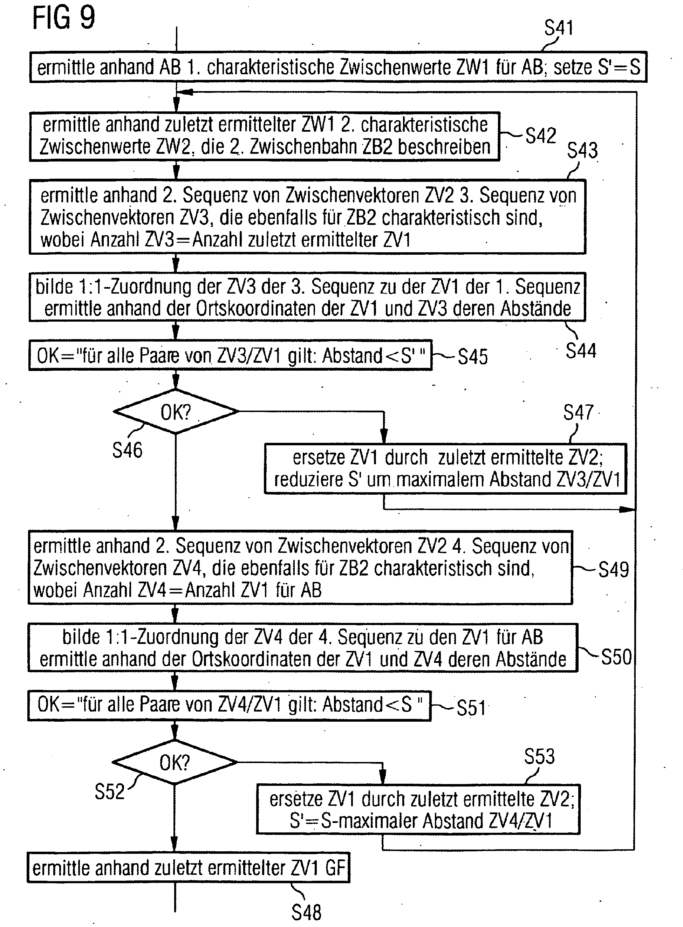

Auch diese Vorgehensweise kann aber noch weiter optimiert werden. Dies wird nachfolgend in Verbindung mit FIG 9 näher erläutert.

Die Vorgehensweise gemäß FIG 9 baut auf der Vorgehensweise von FIG 8 auf. Insbesondere werden die Schritte S41 bis S48 identisch übernommen. Zwischen die Schritte S46 und S488 sind aber Schritte S49 bis S53 eingefügt.

Die Schritte S49 bis S51 entsprechen den Schritten S36 bis S38 von FIG 7. Der Schritt S52 dient wieder der Überprüfung der im Schritt S51 neu ermittelten logischen Variablen OK. Im Schritt S53 ersetzt der Rechner 15 - analog zum Schritt 547-die ersten charakteristischen Zwischenwerte durch die zweiten charakteristischen Zwischenwerte. Weiterhin setzt er die Hilfsschranke S' auf die Differenz von vorbestimmter Schranke S und dem im Schritt S50 bestimmten maximalen Abstand.

Insbesondere B-Splines weisen unter anderem die Eigenschaft auf, dass das Entfernen eines charakteristischen Zwischenvektors den Spline nur lokal (also um den entfernten Zwischenvektor herum) beeinflusst. Es ist daher möglich, die erste Zwischenbahn in Abschnitte aufzuteilen, die aneinander angrenzen. Jedem Abschnitt sind dabei in der ersten Sequenz so viele Zwischenvektoren zugeordnet, dass zumindest das Eliminieren des mittleren Zwischenvektors dieses Abschnitts die erste Zwischenbahn nur innerhalb dieses Abschnitts verändert, außerhalb dieses Abschnitts aber nicht beeinflusst. Die erforderliche Anzahl von Zwischenvektoren ist dabei z. B. durch die Komplexität der Polynome bestimmt, welche dem Spline zu Grunde liegen.

Bei dieser Vorgehensweise kann das Verringern der Anzahl von Zwischenvektoren pro Abschnitt mindestens einmal vorgenommen werden. Dies bewirkt, dass die Anzahl von Zwischenvektoren bei jeder Iteration um mehr als eins abgesenkt wird. Wird dann durch eine zweite Zwischenbahn 23 das Prüfungskriterium des Schrittes S24 verletzt kann wie folgt vorgegangen werden:

Der Rechner 15 prüft, in welchen Abschnitten die zweite Zwischenbahn 23 zu weit von der Anfangsbahn 2 entfernt ist. In diesen Abschnitten bestimmt er die Grobbahn 13 anhand der zuletzt ermittelten ersten Zwischenwerte. Für die übrigen Abschnitte kann der Rechner 15 weitere Filterungen mit Tiefpasscharakteristik vornehmen, die Anfangsbahn 2 also noch weiter vergröbern.

Die Formulierungen bezüglich des Schrittes S26 von FIG 4 bzw. des korrespondierenden Schrittes S48 der FIG 8 und 9 soll insbesondere die obenstehend skizzierte abschnittweise Ermittlung der Grobbahn 13 mit umfassen. Auch soll möglich sein, die Vorgehensweise gemäß den FIG 3 bis 9 zunächst in einem ersten Abschnitt der Anfangsbahn vorzunehmen, dann in einem zweiten Abschnitt der Anfangsbahn 2 usw..

Die obenstehend beschriebene Art der Ermittlung der Grobfunktion GF und der Grobbahn-13 ist sehr effizient und wird daher bevorzugt. Es ist aber auch möglich, die Grobbahn 13 auf ans dere Art und Weise zu ermitteln. Dies wird nachstehend in Verbindung mit FIG 10 näher erläutert.

Gemäß FIG 10 ermittelt der Rechner 15 zur Implementierung des Schrittes S3 von FIG 3 in einem Schritt S61 zunächst für eine Vielzahl von Werten des skalaren Bahnparameters u die jeweilige Position pA auf der Anfangsbahn 2. Die Werte des skalaren Bahnparameters u sind dabei im einfachsten Fall äquidistant gewählt. Es ist aber auch eine andere Art der Auswahl möglich.

In einem Schritt S62 übernimmt der Rechner 15 die Vielzahl von Positionen pA als Positionen einer ersten Zwischenbahn und definiert so die erste Zwischenbahn. In einem Schritt S63 ermittelt der Rechner 15 sodann für jeden vorgegebenen Wert des skalaren Bahnparameters u anhand der Positionen auf der ersten Zwischenbahn korrespondierende Positionen auf einer zweiten Zwischenbahn. Die Positionen auf der ersten Zwischenbahn, die der Rechner 15 für die Bestimmung einer Position auf der zweiten Zwischenbahn heranzieht, korrespondieren dabei mit einem Intervall des skalaren Bahnparameters u, das den vorgegebenen Wert des Bahnparameters u für die jeweilige Position auf der zweiten Zwischenbahn enthält. Anhand der korrespondierenden Positionen auf der ersten Zwischenbahn ermittelt der Rechner 15 (immer noch im Rahmen des Schrittes S63) einen gewichteten oder ungewichteten Mittelwert der Positionen auf der ersten Zwischenbahn. Dieser Mittelwert entspricht der Position auf der zweiten Zwischenbahn.

In Schritten S64 und S65 prüft der Rechner 15, ob der Abstand der zweiten Zwischenbahn von der Anfangsbahn 2 unabhängig vom Wert des skalaren Bahnparameters u stets unterhalb der vorbestimmten Schranke S liegt. Der Schritt S64 korrespondiert dabei bezüglich seiner Funktion mit dem Schritt S23 von FIG 3. Der Schritt S64 kann daher- analog zu den FIG 7, 8 und 9 - derart implementiert werden, dass
- stets unmittelbar die zweite Zwischenbahn mit der Anfangsbahn 2 verglichen wird,
- stets die zweite Zwischenbahn mit der ersten Zwischenbahn verglichen wird und eine Hilfsschranke entsprechend angepasst wird oder
- zwar in der Regel nur die zweite Zwischenbahn mit der ersten Zwischenbahn verglichen wird, ausnahmsweise aber auch die zweite Zwischenbahn direkt mit der Anfangsbahn verglichen wird und eine Hilfsschranke stets entsprechend angepasst wird.

Schritte S66 und S67 korrespondieren im Wesentlichen mit den Schritten S25 und S26 von FIG 3.

Unabhängig davon, ob die Grobbahn 13 gemäß der Vorgehensweise der FIG 3 bis 9 oder gemäß der Vorgehensweise von FIG 10 (bzw. von deren Varianten) ermittelt wird, erfolgt die Ermittlung der Grobbahn 13 aber stets derart, dass mindestens ein Wert des skalaren Bahnparameters u existiert, bei dem eine Ableitung der Grobfunktion GF nach dem skalaren Bahnparameter s sowohl von Null als auch von einer korrespondierenden Ableitung der Anfangsfunktion AF nach dem skalaren Bahnparameter u verschieden ist.

## Patentansprüche

1. Von einem Rechner (15) ausgeführtes Ermittlungsverfahren für eine lagegeführt abzufahrende Grobbahn (13),
- wobei dem Rechner (15) eine lagegeführt abzufahrende Anfangsbahn (2) vorgegeben wird,
- wobei die Anfangsbahn (2) durch eine Anfangsfunktion (AF) beschrieben ist, so dass durch Einsetzen eines skalaren Bahnparameters (u) in die Anfangsfunktion (AF) jeweils eine korrespondierende Position (pA) auf der Anfangsbahn (2) bestimmt ist,
- wobei der skalare Bahnparameter (u) von der Zeit (t) verschieden ist und für einen entlang der Anfangsbahn (2) zurückgelegten Weg (s) charakteristisch ist,
- wobei der Rechner (15) die Anfangsbahn (2) als Funktion des skalaren Bahnparameters (u) einer Filterung mit Tiefpasscharakteristik unterzieht und so eine Grobfunktion (GF) ermittelt, so dass durch Einsetzen des skalaren Bahnparameters (u) in die Grobfunktion (GF) jeweils eine korrespondierende Position (pG) auf der Grobbahn (13) bestimmt ist,
- wobei die. Tiefpasscharakteristik auf den skalaren Bahnparameter (u) bezogen ist und
- wobei der Rechner (15) die Grobfunktion (GF) derart ermittelt, dass der Abstand der Grobbahn (13) von der Anfangsbahn (2) unabhängig vom Wert des skalaren Bahnparameters (s) stets unterhalb einer vorbestimmten Schranke (S) liegt.

2. Ermittlungsverfahren nach Anspruch 1, **dadurch gekennzeichnet, dass** der Rechner (15) zum Ermitteln der Grobfunktion (GF)
a) zunächst erste charakteristische Zwischenwerte der Anfangsbahn (2) ermittelt,
b) anhand der zuletzt ermittelten ersten charakteristischen Zwischenwerte zweite charakteristische Zwischenwerte einer zweiten Zwischenbahn (23) ermittelt, wobei die zweite Zwischenbahn (23) einer auf den skalaren Bahnparameter (u) bezogenen Filterung mit Tiefpasscharakteristik einer ersten Zwischenbahn entspricht, die durch die ersten charakteristischen Zwischenwerte definiert ist,
c) prüft, ob der Abstand der zweiten Zwischenbahn (23) von der Anfangsbahn (2) unabhängig vom Wert des skalaren Bahnparameters (u) unterhalb der vorbestimmten Schranke (S) liegt,
d) bejahendenfalls die ersten charakteristischen Zwischenwerte durch die zuletzt ermittelten zweiten charakteristischen Zwischenwerte ersetzt und zum Schritt b) zurück geht und
e) verneinendenfalls die Grobfunktion (GF) anhand der zuletzt ermittelten ersten charakteristischen Zwischenwerte ermittelt.

3. Ermittlungsverfahren nach Anspruch 2, **dadurch gekennzeichnet , dass** der Rechner (15) im Schritt c) stets unmittelbar den Abstand der zweiten Zwischenbahn (23) von der Anfangsbahn (2) auf Einhalten der vorbestimmten Schranke (S) prüft.

4. Ermittlungsverfahren nach Anspruch 2, **dadurch gekennzeichnet, dass** der Rechner (15)
- im Schritt a) eine Hilfsschranke (S') auf den Wert der vorbestimmten Schranke (S) setzt,
- im Schritt c) prüft, ob der Abstand der zweiten Zwischenbahn (23) von der ersten Zwischenbahn unabhängig vom Wert des skalaren Bahnparameters (u) stets unterhalb der Hilfsschranke (S') liegt, und
- im Schritt d) die Hilfsschranke (S') um den maximalen Abstand der zweiten Zwischenbahn (23) von der ersten Zwischenbahn verringert.

5. Ermittlungsverfahren nach Anspruch 4, **dadurch gekennzeichnet, dass** der Rechner (15) in dem Fall, dass der Abstand der zweiten Zwischenbahn (23) von der ersten Zwischenbahn die Hilfsschranke (S') übersteigt,
- zusätzlich unmittelbar den Abstand der zweiten Zwischenbahn (23) von der Anfangsbahn (2) auf Einhalten der vorbestimmten Schranke (S) überprüft,
- nur dann, wenn der unmittelbare Abstand der zweiten Zwischenbahn (23) von der Anfangsbahn (2) die vorbestimmte Schranke (S) übersteigt, zum Schritt e) übergeht und
- anderenfalls die Hilfsschranke (S') gleich der Differenz von vorbestimmter Schranke (S) und maximalem Abstand der zweiten Zwischenbahn (23) von der Anfangsbahn (2) setzt sowie die ersten charakteristischen Zwischenwerte durch die zuletzt ermittelten zweiten charakteristischen Zwischenwerte ersetzt und zum Schritt b) zurück geht.

6. Ermittlungsverfahren nach einem der Ansprüche 2 bis 5,
**dadurch gekennzeichnet, dass** die ersten charakteristischen Zwischenwerte eine erste Sequenz von Zwischenvektoren bilden, die unter anderem Ortskoordinaten enthalten, dass die zweiten charakteristischen Zwischenwerte eine zweite Sequenz von Zwischenvektoren bilden, die unter anderem Ortskoordinaten enthalten, und dass die Anzahl von Zwischenvektoren der zweiten Sequenz kleiner als die Anzahl von Zwischenvektoren der ersten Sequenz ist.

7. Ermittlungsverfahren nach Anspruch 6 in Verbindung mit Anspruch 4 oder 5, **dadurch gekennzeichnet, dass** der Rechner (15) anhand der zweiten Sequenz von Zwischenvektoren eine dritte Sequenz von Zwischenvektoren ermittelt, die unter anderem Ortskoordinaten enthalten, dass die Zwischenvektoren der dritten Sequenz für die zweite Zwischenbahn (23) charakteristisch sind, dass die Anzahl von Zwischenvektoren der dritten Sequenz der Anzahl von Zwischenvektoren der ersten Sequenz entspricht und dass der Rechner (15) den Abstand der zweien Zwischenbahn (23) von der ersten Zwischenbahn anhand der Ortskoordinaten der Zwischenvektoren der ersten und dritten Sequenz ermittelt.

8. Ermittlungsverfahren nach Anspruch 6 oder 7 in Verbindung mit Anspruch 3 oder 5, **dadurch gekennzeichnet, dass** der Rechner.(15) anhand der zweiten Sequenz von Zwischenvektoren eine vierte Sequenz von Zwischenvektoren ermittelt, welche unter anderem Ortskoordinaten enthalten, dass die Zwischenvektoren der vierten Sequenz für die zweiter Zwischenbahn (23) charakteristisch sind, dass die Anzahl von Zwischenvektoren der vierten Sequenz der Anzahl von Zwischenvektoren der Anfangsbahn (2) entspricht und dass der Rechner (15) den Abstand der zweiten Zwischenbahn (23) von der Anfangsbahn (2) anhand der Ortskoordinaten der Zwischenvektoren der vierten Sequenz und der Anfangsbahn (2) ermittelt.

9. Ermittlungsverfahren nach Anspruch 1, **dadurch gekennzeichnet, dass** der Rechner (15) die Grobfunktion (GF) dadurch ermittelt, dass er für jeden vorgegebenen Wert des skalaren Bahnparameters (u) die korrespondierende Position (pG) auf der Grobbahn (13) durch einen gewichteten oder ungewichteten Mittelwert von Positionen (pA) auf der Anfangsbahn (2) bestimmt und dass die Positionen (pA) auf der Anfangsbahn (2) mit einem Intervall des skalaren Bahnparameters (s) korrespondieren, das den vorgegebenen Wert des skalaren Bahnparameters (u) enthält.

10. Ermittlungsverfahren nach einem der obigen Ansprüche, **dadurch gekennzeichnet, dass** die Anfangsbahn (2) und die Grobbahn (13) sowie etwaige im Rahmen der Ermittlung der Grobbahn (13) ermittelte Zwischenbahnen (23) Splines sind.

11. Ermittlungsverfahren nach einem der obigen Ansprüche, **dadurch gekennzeichnet, dass** der Rechner (15) auch eine ebenfalls lagegeführt abzufahrende Feinbahn ermittelt und dass der Rechner (15) die Feinbahn durch Differenzbildung von Anfangsbahn (2) und Grobbahn (13) oder durch Differenzbildung von Anfangsfunktion (AF) und Grobfunktion (GF) nebst Einsetzen des skalaren Bahnparameters (u) ermittelt.

12. Ermittlungsverfahren nach einem der obigen Ansprüche,
**dadurch gekennzeichnet, dass** die Ermittlung der Grobbahn (13) derart erfolgt, dass mindestens ein Wert des skalaren Bahnparameters (u) existiert, bei dem eine Ableitung der Grobfunktion (GF) nach dem skalaren Bahnparameter (u) sowohl von Null als auch von einer korrespondierenden Ableitung der Anfangsfunktion (AF) nach dem skalaren Bahnparameter (u) verschieden ist.

13. Ermittlungsverfahren nach einem der obigen Ansprüche,
**dadurch gekennzeichnet, dass** es online oder offline ausgeführt wird.

14. Datenträger mit einem auf dem Datenträger gespeicherten Computerprogramm (14) zur Durchführung eines Ermittlungsverfahrens nach einem der obigen Ansprüche, wenn das Computer-programm (14) von einem Rechner (15) ausgeführt wird.

15. Datenträger mit zwei auf dem Datenträger gespeicherten Folgen von Lagesollwerten, wobei jeder Lagesollwert der einen Folge mit einem Lagesollwert der anderen Folge korrespondiert, wobei je eine der Folgen eine Folge von Positionen auf einer Anfangsbahn (2), einer Grobbahn (13) oder einer Feinbahn entspricht, wobei die Grobbahn (13) anhand der Anfangsbahn (2) gemäß einem Ermittlungsverfahren nach einem der Ansprüche 1 bis 13 ermittelt wurde und die Feinbahn der Differenz von Anfangsbahn (2) und Grobbahn (13) entspricht.

## Claims

1. Method for the determination of a rough trajectory (13) to be followed in a positionally guided manner, executed by a computer (15),
- wherein an initial trajectory (2) to be followed in a positionally guided manner is input into the computer (15),
- wherein the initial trajectory (2) is described by an initial function (AF) so that a corresponding position (pA) on the initial trajectory (2) is determined by substituting a scalar trajectory parameter (s) into the initial function (AF),
- wherein the scalar trajectory parameter (s) is different from time (t) and is characteristic of a distance (s) covered along the initial trajectory (2),
- wherein the computer (15) filters the initial trajectory (2) with low-pass characteristics as a function of the scalar trajectory parameter (s) and thus determines a rough function (GF) such that one respective corresponding position (pG) is determined on the rough trajectory (13) by substituting the scalar trajectory parameter (s) into the rough function (GF),
- wherein the low-pass characteristic is referred to the scalar trajectory parameter (s), and
- wherein the computer (15) determines the rough function (GF) in such a manner that the distance of the rough trajectory (13) from the initial trajectory (2) always lies below a predetermined threshold (S) independently of the value of the scalar trajectory parameter (s).

2. Determination method according to Claim 1, **characterized in that** the computer (15), for determining the rough function (GF),
a) first determines first characteristic intermediate values of the initial trajectory (2),
b) by means of the first characteristic intermediate values determined last, determines second characteristic intermediate values of a second intermediate trajectory (23), wherein the second intermediate trajectory (23) corresponds to a filtering, referred to the scalar trajectory parameter (s), with low-pass characteristics of a first intermediate trajectory which is defined by the first characteristic intermediate values,
c) checks whether the distance of the second intermediate trajectory (23) from the initial trajectory (2) lies below the predetermined threshold (S) independently of the value of the scalar trajectory parameter (s),
d) in the affirmative case, replaces the first characteristic intermediate values by the second characteristic intermediate values determined last and goes back to step b), and
e) in the negative case, determines the rough function (GF) by means of the first characteristic intermediate values determined last.

3. Determination method according to Claim 2, **characterized in that** the computer (15), in step c), always directly checks the distance of the second intermediate trajectory (23) from the initial trajectory (2) for maintenance of the predetermined threshold (S).

4. Determination method according to Claim 2, **characterized in that** the computer (15)
- in step a), sets an auxiliary threshold (S') to the value of the predetermined threshold (S),
- in step c), checks whether the distance of the second intermediate trajectory (23) from the first intermediate trajectory is always below the auxiliary threshold (S') independently of the value of the scalar trajectory parameter (s), and
- in step d), reduces the auxiliary threshold (S') by the maximum distance of the second intermediate trajectory (23) from the first intermediate trajectory.

5. Determination method according to Claim 4, **characterized in that** the computer (15), in the case where the distance of the second intermediate trajectory (23) from the first intermediate trajectory exceeds the auxiliary threshold (S'),
- additionally directly checks the distance of the second intermediate trajectory (23) from the initial trajectory (2) for maintenance of the predetermined threshold (S),
- changes the step e) only if the immediate distance of the second intermediate trajectory (23) from the initial trajectory (2) exceeds the predetermined threshold (S), and
- otherwise sets the auxiliary threshold (S') equal to the difference of the predetermined threshold (S) and the maximum distance of the second intermediate trajectory (23) from the initial trajectory (2), and replaces the first characteristic intermediate values by the second characteristic intermediate values determined last and goes back to step b).

6. Determination method according to one of Claims 2 to 5, **characterized in that** the first characteristic intermediate values form a first sequence of intermediate vectors which, among other things, contains space coordinates, that the second characteristic intermediate values form a second sequence of intermediate vectors which, among other things, contain space coordinates, and that the number of intermediate vectors of the second sequence is smaller than the number of intermediate vectors of the first sequence.

7. Determination method according to Claim 6 in conjunction with Claim 4 or 5, **characterized in that** the computer (15) determines by means of the second sequence of intermediate vectors a third sequence of intermediate vectors which, among other things, contain space coordinates, that the intermediate vectors of the third sequence are characteristic of the second intermediate trajectory (23), that the number of intermediate vectors of the third sequence corresponds to the number of intermediate vectors of the first sequence and that the computer (15) determines the distance of the second intermediate trajectory (23) from the first intermediate trajectory by means of the space coordinates of the intermediate vectors of the first and third sequence.

8. Determination method according to Claim 6 or 7 in conjunction with Claim 3 or 5, **characterized in that** the computer (15) determines by means of the second sequence of intermediate vectors a fourth sequence of intermediate vectors which, among other things, contain space coordinates, that the intermediate vectors of the fourth sequence are characteristic of the second intermediate trajectory (23), that the number of intermediate vectors of the fourth sequence corresponds to the number of intermediate vectors of the initial trajectory (2) and that the computer (15) determines the distance of the second intermediate trajectory (23) from the initial trajectory (2) by means of the space coordinates of the intermediate vectors of the fourth sequence and the initial trajectory (2).

9. Determination method according to Claim 1, **characterized in that** the computer (15) determines the rough function (GF) **in that** it determines for each predetermined value of the scalar trajectory parameter (s) the corresponding position (pG) on the rough trajectory (13) by a weighted or unweighted mean value of positions (pA) on the initial trajectory (2) and that the positions (pA) on the initial trajectory (2) correspond to an interval of the scalar trajectory parameter (s) which contains the predetermined value of the scalar trajectory parameter (s).

10. Determination method according to one of the above claims, **characterized in that** the initial trajectory (2) and the rough trajectory (13) and any intermediate trajectories (23) determined as part of the determination of the rough trajectory (13) are splines.

11. Determination method according to one of the above claims, **characterized in that** the computer (15) also determines a fine trajectory, also to be followed in a positionally guided manner, **in that** the computer (15) determines the fine trajectory by forming the difference of initial trajectory (2) and rough trajectory (13) or by forming the difference of initial function (AF) and rough function (GF) and substituting the scalar trajectory parameter (s).

12. Determination method according to one of the above claims, **characterized in that** the rough trajectory (13) is determined in such a manner that there is at least one value of the scalar trajectory parameter (s) at which a derivation of the rough function (GF) with respect to the scalar trajectory parameter (s) is different both from zero and from a corresponding derivation of the initial function (AF) with respect to the scalar trajectory parameter (s).

13. Determination method according to one of the above claims, **characterized in that** it is carried out online or offline.

14. Data medium with a computer program (14), stored on the data medium, for carrying out a determination method according to one of the above claims when the computer program (14) is executed by a computer (15).

15. Data medium with two sequences of nominal position values stored on the data medium, wherein each nominal position value of one sequence corresponds to a nominal position value of the other sequence, wherein in each case one of the sequences corresponds to a sequence of positions on an initial trajectory (2), a rough trajectory (13) or a fine trajectory, wherein the rough trajectory (13) was determined by means of the initial trajectory (2) in accordance with a determination method according to one of Claims 1 to 13 and the fine trajectory corresponds to the difference of initial trajectory (2) and rough trajectory (13).

## Revendications

1. Procédé de détermination exécuté par un ordinateur ( 15 ) d'une trajectoire ( 13 ) approximative à suivre de manière guidée en position,
- dans lequel on prescrit à l'ordinateur ( 15 ) une trajectoire ( 2 ) de début à suivre de manière guidée en position,
- dans lequel on décrit la trajectoire ( 2 ) de début par une fonction ( AF ) de début, de manière à définir en portant un paramètre ( s ) scalaire de trajectoire dans la fonction ( AF ) de début respectivement une position ( pA ) correspondante sur la trajectoire ( 2 ) de début,
- dans lequel le paramètre ( s ) scalaire de trajectoire est différent du temps ( t ) et est caractéristique d'un trajet ( s ) parcouru le long de la trajectoire ( 2 ) de début,
- dans lequel l'ordinateur soumet la trajectoire ( 2 ) de début en tant que fonction du paramètre ( s ) scalaire de trajectoire à un filtrage par une caractéristique passe-bas et détermine ainsi une fonction ( GF ) approximative de sorte que, en portant le paramètre ( s ) scalaire de trajectoire dans la fonction ( GF ) approximative, on détermine respectivement une position ( pG ) correspondante sur la trajectoire ( 13 ) approximative,
- dans lequel la caractéristique passe-bas est rapportée au paramètre ( s ) scalaire de trajectoire et
- dans lequel le calculateur ( 15 ) détermine la fonction ( GF ) approximative de façon à ce que la distance de la trajectoire ( 13 ) approximative à la trajectoire ( 2 ) de début se trouve toujours, indépendamment de la valeur du paramètre ( s ) scalaire de trajectoire, en dessous d'une limite ( S ) déterminée à l'avance.

2. Procédé de détermination suivant la revendication 1, **caractérisé en ce que**, pour déterminer la fonction ( GF ) approximative, le calculateur ( 15 )
a) détermine d'abord des premières valeurs intermédiaires caractéristiques de la trajectoire ( 2 ) de début,
b) au moyen des premières valeurs intermédiaires caractéristiques déterminées en dernier, détermine des deuxièmes valeurs intermédiaires caractéristiques d'une deuxième trajectoire ( 23 ) intermédiaire, la deuxième trajectoire ( 23 ) intermédiaire correspondant à un filtrage rapporté au paramètre ( s ) scalaire de trajectoire avec une caractéristique passe-bas d'une première trajectoire intermédiaire, qui est définie par les premières valeurs intermédiaires caractéristiques,
c) contrôle si la distance de la deuxième trajectoire ( 23 ) intermédiaire à la trajectoire ( 2 ) de début se trouve, indépendamment de la valeur du paramètre ( s ) scalaire de trajectoire, en dessous d'une limite ( S ) déterminée à l'avance,
d) dans l'affirmative, remplace les premières valeurs intermédiaires caractéristiques par les deuxièmes valeurs intermédiaires caractéristiques déterminées en dernier et revient au stade b ) et
e) dans la négative, détermine la fonction ( GF ) approximative au moyen des premières valeurs intermédiaires caractéristiques déterminées en dernier.

3. Procédé de détermination suivant la revendication 2, **caractérisé en ce que** l'ordinateur ( 15 ) calcule toujours directement que la distance entre la deuxième trajectoire ( 23 ) intermédiaire et la trajectoire ( 2 ) de début est maintenue dans la limite ( S ) déterminée à l'avance.

4. Procédé de détermination suivant la revendication 2, **caractérisé en ce que** l'ordinateur
- au stade a ), fixe une limite ( S' ) auxiliaire à la valeur de la limite ( S ) déterminée à l'avance,
- au stade c ), contrôle si la distance entre la deuxième trajectoire ( 23 ) intermédiaire et la première trajectoire intermédiaire est, indépendamment de la valeur du paramètre ( s ) scalaire de trajectoire, toujours en dessous de la limite ( S' ) auxiliaire, et
- au stade d ), diminue la limite ( S' ) auxiliaire de la distance maximum entre la deuxième trajectoire ( 23 ) intermédiaire et la première trajectoire intermédiaire.

5. Procédé de détermination suivant la revendication 4, **caractérisé en ce que** l'ordinateur ( 15 ), dans le cas où la distance entre la deuxième trajectoire ( 23 ) intermédiaire et la première trajectoire intermédiaire dépasse la limite ( S' ) auxiliaire,
- contrôle, en outre directement, que la distance entre la deuxième trajectoire ( 23 ) intermédiaire et la trajectoire ( 2 ) de début est maintenue dans la limite ( S ) déterminée à l'avance,
- seulement si la distance directe entre la deuxième trajectoire ( 23 ) intermédiaire et la trajectoire ( 2 ) de début dépasse la limite ( S ) déterminée à l'avance passe au stade e ) et
- sinon, fixe la limite ( S' ) auxiliaire égale à la différence de la limite ( S ) déterminée à l'avance et de la distance maximum entre la deuxième trajectoire ( 23 ) intermédiaire et la trajectoire ( 2 ) de début ainsi que remplace les premières valeurs intermédiaires caractéristiques par les deuxièmes valeurs intermédiaires caractéristiques déterminées en dernier et retourne au stade b ).

6. Procédé de détermination suivant l'une des revendications 2 à 5, **caractérisé en ce qu'**une première valeur intermédiaire caractéristique forme une première séquence de vecteurs intermédiaires, qui contiennent entre autres des coordonnées spatiales, **en ce que** les deuxièmes valeurs intermédiaires caractéristiques forment une deuxième séquence de vecteurs intermédiaires, qui contiennent entre autres des coordonnées spatiales et **en ce que** le nombre de vecteurs intermédiaires de la deuxième séquence est plus petit que le nombre de vecteurs intermédiaires de la première séquence.

7. Procédé de détermination suivant la revendication 6 en liaison avec la revendication 4 ou 5, **caractérisé en ce que** le calculateur ( 15 ) détermine, au moyen de la deuxième séquence de vecteurs intermédiaires, une troisième séquence de vecteurs intermédiaires, qui contiennent entre autres des coordonnées spatiales, **en ce que** les vecteurs intermédiaires de la troisième séquence sont caractéristiques pour la deuxième trajectoire ( 23 ) intermédiaire, **en ce que** le nombre de vecteurs intermédiaires de la troisième séquence correspond au nombre de vecteurs intermédiaires de la première séquence et **en ce que** l'ordinateur ( 15 ) détermine la distance entre la deuxième trajectoire ( 23 ) intermédiaire et la première trajectoire intermédiaire au moyen des coordonnées spatiales de vecteurs intermédiaires de la première et de la troisième séquences.

8. Procédé de détermination suivant la revendication 6 ou 7 en liaison avec la revendication 3 ou 5, **caractérisé en ce que** l'ordinateur ( 15 ) détermine, au moyen de la deuxième séquence de vecteurs intermédiaires, une quatrième séquence de vecteurs intermédiaires qui contiennent entre autres des coordonnées spatiales, **en ce que** les vecteurs intermédiaires de la quatrième séquence sont caractéristiques pour la deuxième trajectoire ( 23 ) intermédiaire, **en ce que** le nombre de vecteurs intermédiaires de la quatrième séquence correspond au nombre de vecteurs intermédiaires de la trajectoire ( 2 ) de début et **en ce que** l'ordinateur ( 15 ) détermine la distance entre la deuxième trajectoire ( 23 ) intermédiaire et la trajectoire ( 2 ) de début au moyen des coordonnées spatiales et des vecteurs intermédiaires de la quatrième séquence et de la trajectoire ( 2 ) de début.

9. Procédé de détermination suivant la revendication 1, **caractérisé en ce que** l'ordinateur ( 15 ) détermine la fonction ( GF ) approximative en déterminant, pour chaque valeur prescrite du paramètre ( s ) scalaire de trajectoire, la position ( pG ) correspondante sur la trajectoire ( 13 ) approximative par une valeur moyenne pondérée ou non pondérée de positions ( pA ) sur la trajectoire ( 2 ) de début et **en ce que** les positions ( pA ) sur la trajectoire ( 2 ) de début correspondent à un intervalle du paramètre ( s ) scalaire de trajectoire qui contient la valeur prescrite du paramètre ( s ) scalaire de trajectoire.

10. Procédé de détermination suivant l'une des revendications précédentes, **caractérisé en ce que** la trajectoire ( 2 ) de début et la trajectoire ( 13 ) approximative ainsi que d'éventuelles trajectoires ( 23 ) intermédiaires déterminées dans le cas de la détermination de la trajectoire ( 13 ) approximative sont des splines.

11. Procédé de détermination suivant l'une des revendications précédentes, **caractérisé en ce que** le calculateur ( 15 ) détermine aussi une trajectoire fine à suivre de manière guidée en position et **en ce que** le calculateur ( 15 ) détermine la trajectoire fine par formation d'une différence entre la trajectoire ( 2 ) de début et la trajectoire ( 13 ) approximative ou par formation d'une différence entre la fonction ( AF ) de début et la fonction ( GF ) approximative en portant, en outre, le paramètre ( s ) scalaire de trajectoire.

12. Procédé de détermination suivant l'une des revendications précédentes, **caractérisé en ce qu'**on effectue la détermination de la trajectoire ( 13 ) approximative de façon qu'il existe au moins une valeur du paramètre ( s ) scalaire de trajectoire pour laquelle une dérivée de la fonction ( GF ) approximative, en fonction du paramètre ( s ) scalaire de trajectoire, est différente tant de zéro qu'également d'une dérivée correspondante de la fonction ( AF ) de début, en fonction du paramètre ( s ) scalaire de trajectoire.

13. Procédé de détermination suivant l'une des revendications précédentes, **caractérisé en ce qu'**il est exécuté online ou offline.

14. Support de données ayant un programme ( 14 ) informatique mémorisé sur le support de données pour la mise en oeuvre d'un procédé de détermination suivant l'une des revendications précédentes, lorsque le programme ( 14 ) informatique est exécuté par un ordinateur ( 15 ).

15. Support de données ayant de suite mémorisé, sur le support de données de valeurs de consigne de position, chaque valeur de consigne de position de l'une des suites correspondant à une valeur de consigne de position de l'autre suite, respectivement l'une des suites correspondant à une suite de position sur une trajectoire ( 2 ) de début d'une trajectoire ( 13 ) approximative ou une trajectoire fine, la trajectoire ( 13 ) approximative ayant été déterminée au moyen de la trajectoire ( 2 ) de début suivant un procédé de détermination suivant l'une des revendications 1 à 13 et la trajectoire fine correspondant à la différence entre la trajectoire ( 2 ) de début et la trajectoire ( 13 ) approximative.
